# FASCICULE DE BREVET EUROPEEN

(11) **EP 3 086 935 B1**
(45) Date de publication et mention de la délivrance du brevet: **13.03.2019**
(21) Numéro de dépôt: 14828245.2
(22) Date de dépôt: 18.12.2014
(51) Int. Cl.: B29D 30/56, B29D 30/54

(54) **PROCÉDÉ DE RECHAPAGE D'UNE ENVELOPPE DE PNEUMATIQUE AU MOYEN D'UN ROULEAU**
VERFAHREN ZUR RUNDERNEUERUNG VON LUFTREIFEN UNTER VERWENDUNG EINER ANDRUCKWALZE
METHOD OF RETREADING TIRES USING A STITCHING ROLLER

(30) Priorité: 23.12.2013 FR 1363443
(43) Date de publication de la demande: 02.11.2016
(73) Titulaire: Compagnie Générale des Etablissements Michelin, 63000 Clermont-Ferrand (FR)
(72) Inventeur: MERINO LOPEZ, José, F-63040 Clermont-Ferrand Cedex 9 (FR)
(74) Mandataire: Redouté, Gilles Pierre
(86) Numéro de dépôt international: PCT/FR2014/053414
(87) Numéro de publication internationale: WO 2015/097374

(56) Documents cités:
- FR-A1- 2 953 456
- FR-A1- 2 988 644
- JP-A- 2012 192 684
- US-A- 3 753 821
- US-A- 3 989 563
- US-A- 4 088 521
- US-A1- 2011 056 603

## Description

L'invention concerne le rechapage des pneumatiques.

Le rechapage d'une enveloppe de pneumatique consiste à enlever la bande de roulement usagée de l'enveloppe pour la remplacer par une bande de roulement en bon état, généralement neuve.

Il est connu à cette fin, par exemple des documents FR 2 988 644 A1 et US 2011/056603 A1, de prévoir entre la carcasse et la bande de roulement une couche de liaison thermofusible assurant l'adhérence de la bande à la carcasse et qui se ramollit lorsqu'elle est chauffée à une température prédéterminée, permettant ainsi de séparer facilement la bande de roulement de la carcasse. De même, lors de la mise en place de la nouvelle bande de roulement, on chauffe la couche thermofusible tout en exerçant une pression sur la bande de roulement, puis on laisse refroidir l'enveloppe pour obtenir l'adhérence de la bande à la carcasse.

Pour appliquer une pression sur la couche de liaison, il est connu d'effectuer le roulettage de la bande de roulement au moyen d'un rouleau qui épouse le profil de la bande sur toute sa largeur.

Mais la forme du rouleau dépend de la forme de la bande et des sculptures qu'elle présente. Il est donc nécessaire de disposer d'un rouleau par type d'enveloppe de pneumatique. De plus, cette méthode comprime la bande de roulement et peut entraîner son allongement.

Le document US 3 989 563 A divulgue une installation de rechapage d'une enveloppe de pneumatique selon le préambule de la revendication 11. On se réfère également aux documents US 4 088 521 A, JP 2012 192684 A et US 3 753 821 A.

Un but de l'invention est de pallier certains au moins de ces inconvénients.

À cet effet, on prévoit selon l'invention un procédé de rechapage d'une enveloppe de pneumatique dans lequel, une bande de roulement en gomme cuite étant disposée sur une carcasse avec une couche de matériau thermofusible interposée entre la bande et la carcasse, on effectue un roulettage de la bande de roulement au moyen d'au moins un rouleau ayant une largeur inférieure à une largeur de la bande de roulement.

Ainsi, le même rouleau peut être utilisé pour des enveloppes de pneumatique de types différents, en particulier ayant des largeurs de bande de roulement différentes et des sculptures différentes. On peut effectuer le roulettage de l'intégralité de la bande de roulement en faisant plusieurs tours de celle-ci avec le rouleau.

On peut prévoir que la bande de roulement comprend des renforts.

Ces renforts peuvent comprendre des câbles et/ou des fils. Ils peuvent être métalliques ou en matière synthétique, par exemple en nylon, en PET (polyethylene terephthalate), en PEN (polyéthylène naphtalène), en rayonne ou encore en aramide. Il peut s'agir de renforts orientés avec des angles compris entre + 5° et -10 ° par rapport à la direction longitudinale.

Dans un mode de réalisation, on apporte la bande de roulement sous la forme d'un anneau fermé et on la dispose sur la carcasse.
Avantageusement, la largeur du rouleau est inférieure à une moitié de la largeur de la bande de roulement.

De préférence, elle est inférieure à un quart de la largeur de la bande de roulement.

Avantageusement, le rouleau effectue plusieurs tours de l'enveloppe sur la bande de roulement et on déplace le rouleau suivant une direction d'un axe de l'enveloppe entre les tours.

On peut prévoir que le rouleau exerce sur la couche thermofusible une pression comprise entre 1 et 4.10⁵ Pa.

Dans un mode de réalisation, le nombre de rouleaux est supérieur ou égal à deux, les rouleaux effectuant le roulettage de la bande de roulement simultanément.

Ainsi, bien qu'on utilise des rouleaux de taille réduite, ce mode de réalisation permet d'éviter une grande augmentation des temps de cycle.

Avantageusement, on déplace simultanément les rouleaux vers des bords respectifs opposés de la bande de roulement.

Dans un mode de réalisation, on crée un espace entre un bord de la bande de roulement et la carcasse et on chauffe le matériau thermofusible contigu à cet espace.

Par exemple, pendant cette étape, un autre bord de la bande de roulement est en contact avec la carcasse,

On peut créer cet espace au moyen d'un outil tronconique par exemple.

Ce mode de réalisation permet d'effectuer un chauffage local et ponctuel de la couche de liaison juste avant le roulettage, sans chauffer d'autres parties de l'enveloppe. Il est rendu possible par le fait que la largeur du rouleau est inférieure à celle de la bande de roulement.

Dans un mode de réalisation, on soulève la bande de roulement.

Ce mode est adapté aux bandes de roulement dépourvues de renfort.

Dans un autre mode, on presse la carcasse.

Ce mode est adapté aux bandes pourvues de renforts bien qu'il puisse être utilisé avec des bandes de roulement non renforcées..Dans un autre mode de réalisation, on peut à la fois soulever la bande de roulement et presser la carcasse. Ce mode est adapté aux bandes de roulement sans renfort. Il réduit les tensions sur la bande de roulement.

On prévoit également selon l'invention une installation selon la revendication 11.

Cette installation permet de mettre en oeuvre le procédé de l'invention.

On prévoit enfin une enveloppe de pneumatique qui résulte d'un procédé de rechapage selon l'invention.

Nous allons maintenant présenter plusieurs modes de mise en oeuvre du procédé de l'invention en référence aux dessins annexés sur lesquels :
- la figure 1 est une vue en coupe axiale d'une installation de rechapage mettant en oeuvre le procédé de l'invention ;
- les figures 2 et 3 montrent une enveloppe en cours de rechapage conformément à un autre mode de mise en oeuvre du procédé de l'invention ;
- les figures 4 et 5 sont des vues d'une enveloppe en cours de rechapage conformément à un autre mode de mise en oeuvre du procédé de l'invention ; et
- les figures 6 et 7 sont des vues analogues à la figure 5 montrant deux autres modes de réalisation respectifs.

Nous allons présenter plusieurs modes de mise en oeuvre du procédé de l'invention qui sert pour le rechapage des enveloppes de pneumatique de roue de véhicule.

On suppose qu'on dispose d'une enveloppe de pneumatique dont la bande de roulement est usée.

On ôte cette bande de la carcasse afin que celle-ci soit prête à recevoir une bande de roulement neuve ou à tout le moins compatible avec l'utilisation de l'enveloppe en tant que pneumatique sur une roue.

À cette fin, on peut prévoir que l'enveloppe comprend à l'origine une couche de liaison thermofusible interposée entre la carcasse et la bande de roulement. Pour éliminer la bande de roulement, on peut donc chauffer cette couche thermofusible par des moyens connus en eux-mêmes jusqu'à une température prédéterminée caractéristique du matériau, à laquelle ce matériau se ramollit. Il suffit alors de tirer sur la bande de roulement pour la séparer de la carcasse.

Par matériau thermofusible, on comprend un matériau apte à se ramollir lorsqu'il est chauffé pour le porter à une température prédéterminée caractéristique du matériau, dite température de ramollissement. Par exemple, un tel matériau peut être choisi parmi les élastomères thermoplastiques tels que le SBS (styrène-butadiène-styrène) ou le SIS (styrène-isoprène-styrène). Pour les besoins de l'invention, on se réfère à un matériau thermofusible capable de ramollir à une température comprise entre 140°C et 200°C.

On dispose donc d'une carcasse 4 d'enveloppe 2 dépourvue de bande de roulement. Cette carcasse comprend une couche sommet 6 et deux flancs 8.

On dispose par ailleurs d'une bande de roulement neuve 10 réalisée en gomme cuite, munie de renforts ou pas. De plus, la bande a une configuration en anneau fermé avant sa pose sur la carcasse.

On applique ensuite du matériau thermofusible sur une face externe de la couche de sommet 6 destinée à recevoir la bande de roulement ou sur une face interne de cette dernière destinée à venir contre la carcasse. En l'espèce, on effectue cette application sur ces deux faces.

Ensuite, on installe la bande de roulement 10 sur la couche de sommet 6 en appliquant l'une contre l'autre les deux couches de matériau thermofusible qui ne formeront plus qu'une unique couche de liaison à l'issue du rechapage.

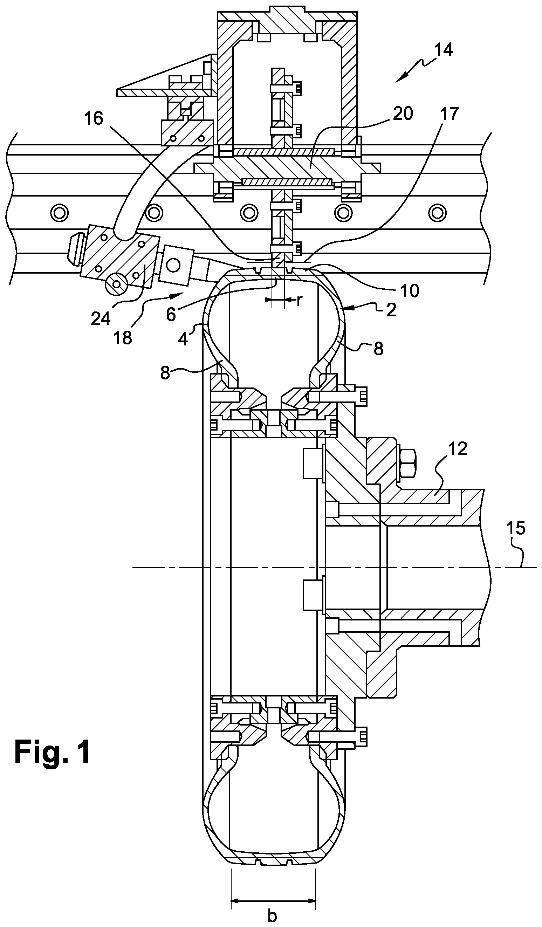

Puis on installe l'enveloppe sur un support tournant 12 de l'installation 14 illustrée à la figure 1. L'installation comprend des moyens pour mettre le support 14 en rotation autour d'un axe horizontal 15 qui correspond à l'axe principal de l'enveloppe 2.

On met le support et l'enveloppe en rotation et on applique contre la face externe de la bande de roulement 10 au moins un rouleau de roulettage 16 de l'installation. L'installation 14 est équipée de moyens de support 20 du rouleau 16 qui assurent son maintien en pression contre la bande de roulement durant le roulettage. Ce rouleau présente, suivant la direction de son axe de rotation 17 qui est parallèle à l'axe 15, une largeur r inférieure à la largeur totale b de la bande de roulement. Dans le présent exemple, cette largeur est inférieure à la moitié et même au quart de la largeur b. Le rouleau exerce une pression radiale sur la bande de roulement en direction de l'axe 15 pour la presser contre la couche de liaison et la couche de sommet 6.

Les moyens de support 20 sont agencés pour guider le rouleau à coulissement suivant une direction parallèle à l'axe 15 durant le roulettage. Ainsi, on commande l'installation de sorte que le rouleau effectue plusieurs tours de l'enveloppe sur la bande de roulement et on déplace le rouleau suivant cette direction pendant les tours. Par exemple, on peut décaler le rouleau d'un tour à l'autre d'un pas qui est égal à la largeur *r* du rouleau. De la sorte, bien que cette largeur soit très inférieure à celle de la bande de roulement, on assure un roulettage complet de cette dernière. Toutefois, le pas peut être légèrement inférieur pour assurer un meilleur roulettage ou légèrement supérieur pour diminuer le nombre de tours pour rechaper l'enveloppe.

Durant le roulettage, on chauffe le matériau thermofusible localement. A cette fin, l'installation est équipée de moyens 18 pour chauffer une zone de la bande de roulement avant que celle-ci subisse le roulettage par le rouleau. Ces moyens s'étendent donc en amont du rouleau par référence au sens de rotation de la bande. Il peut s'agir d'un chauffage convectif par air chaud, d'un chauffage par une flamme ou d'un chauffage par rayonnement, par exemple au moyen d'un laser. Plus particulièrement selon l'invention, on chauffe pendant une durée très courte et localement en surface une couche mince du matériau thermofusible de manière à pouvoir la ramollir avant le roulettage et à ce que le matériau thermofusible ne soit plus ramolli immédiatement après le passage du rouleau. A titre d'exemple, lorsque la couche de matériau thermofusible est une couche de SBS, on chauffe localement et de manière instantanée la couche de SBS à une température égale ou supérieure à 150°C juste avant le roulettage. La température de la couche thermofusible chute à 90°C immédiatement après le roulettage. Cela permet de garder en place le matériau thermofusible rapidement solidifié et d'éviter qu'il soit déplacé par la pression exercée par le rouleau. On préfère déposer une couche fine d'une épaisseur inférieure à 100µm et plus préférentiellement inférieure à 50µm afin qu'elle puisse être chauffée et ramollie instantanément, tout en pouvant se solidifier rapidement en l'absence du chauffage.

Une fois le roulettage achevé, on laisse refroidir l'enveloppe, ce qui entraîne la solidification de la couche de liaison en matériau thermofusible et l'adhésion ferme de la bande de roulement à la carcasse. L'enveloppe est alors prête à être utilisée.

De préférence, la bande de roulement comprend des renforts en métal, en textile et/ou en matériau synthétique, orientés à 0° ou faiblement inclinés par rapport à cette direction pour éviter les allongements induits par la pression du rouleau qui comprime la bande de roulement. Le matériau synthétique est par exemple du nylon, du PET (polyethylene terephthalate) ou de l'aramide.

Le matériau thermofusible est par exemple formé par un élastomère thermoplastique.

On peut prévoir que le chauffage permet de le porter à une température de 200° environ. On peut agencer l'installation de sorte que le rouleau applique une pression locale comprise entre 1 et 4 bar, soit entre 1.10⁵ et 4.10⁵ Pa, de préférence entre 2 et 3.10⁵ Pa. Sachant que le matériau thermofusible doit refroidir rapidement après avoir quitté la zone de pression, on choisira convenablement le rapport entre la vitesse de rotation de l'enveloppe et le diamètre du rouleau de roulettage.

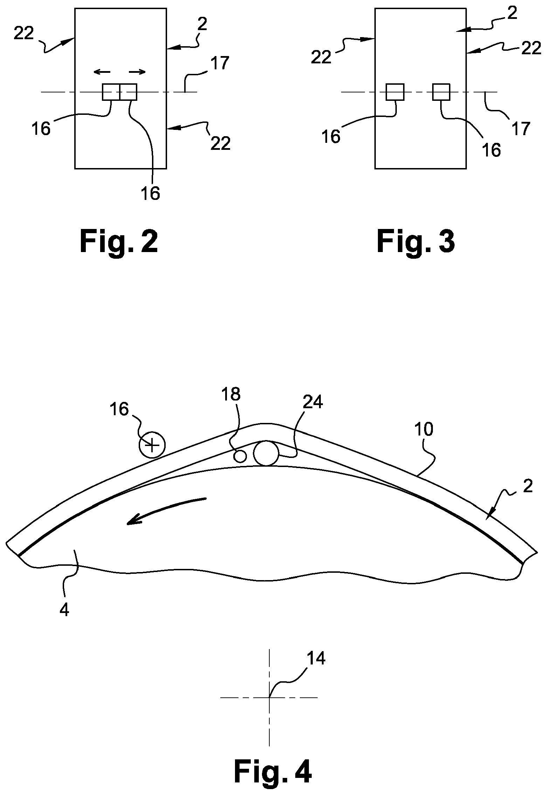

Dans un autre mode de réalisation illustré aux figures 2 et 3, l'installation est équipée non pas d'un seul rouleau 16 mais de plusieurs. Ces rouleaux 16 sont ici au nombre de deux et coaxiaux. Ils effectuent le roulettage de la bande de roulement simultanément.

Au début du roulettage, les deux rouleaux occupent par exemple des positions contiguës à égale distance des bords opposés 22 de la bande de roulement. Après le roulettage de la partie centrale de cette dernière sur un ou plusieurs tours, lors des tours suivants, on déplace progressivement les rouleaux vers les bords respectifs 22, par exemple à chaque fois d'un pas égal à la largeur de chaque rouleau. Cette façon de procéder en partant de la zone centrale de la bande permet de ne pas emprisonner de bulle d'air entre la carcasse et la bande de roulement.

De préférence, chacun des deux rouleaux est associé à son propre organe de chauffage.

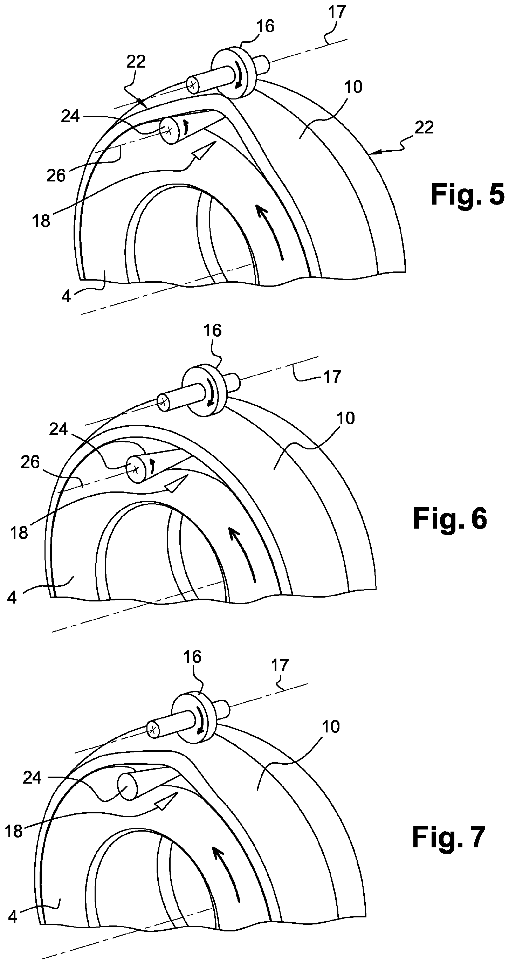

Un autre mode de réalisation est illustré aux figures 4 et 5. Cette fois, on soulève localement la bande de roulement 10 pour chauffer le matériau thermofusible s'étendant entre cette dernière et la carcasse 4 avant de les presser l'une contre l'autre. L'organe de chauffage 18 s'étend donc au droit de l'ouverture ainsi ménagée entre ces deux éléments, comme illustré sur la figure 4.

Plus précisément, en l'espèce, on maintient un premier bord 22 de la bande de roulement en contact avec la carcasse, et pendant ce temps on soulève le deuxième bord 22 et on chauffe le matériau thermofusible contiguë au deuxième bord dans l'espace ainsi crée. Naturellement, ces opérations sont effectuées localement sur un tronçon de l'enveloppe sans affecter le reste de l'enveloppe. En aval du lieu de chauffage, la bande de roulement est pressée contre la carcasse par le rouleau 16. De la sorte, au moyen d'un ou plusieurs tours, on chauffe la couche de liaison et on presse toute la circonférence de la bande de roulement contre la carcasse sur une moitié de sa largeur. Comme précédemment, ces opérations sont effectuées depuis le centre jusqu'à l'épaule contiguë au bord 22 ainsi soulevé. On applique donc progressivement la bande de roulement contre la carcasse en partant du centre vers l'épaule.

Ensuite, on opère de même avec l'autre moitié de la bande de roulement. Pour cela, on maintient le deuxième bord 22 en contact avec la carcasse, on soulève localement le premier bord. Dans l'espace ainsi crée, on chauffe le matériau thermofusible contigu au premier bord juste avant d'effectuer le roulettage en aval de la zone de chauffage.

On peut toutefois effectuer les opérations sur les deux moitiés de la bande simultanément.

Pour soulever la bande de roulement, on peut utiliser par exemple un outil tel qu'une pointe 24 ayant une forme tronconique dont la partie la plus étroite est introduite entre la carcasse et la bande de roulement pour soulever cette dernière. La pointe 24 est portée par l'installation 14 par exemple au moyen d'un bras comme illustré sur la figure 1. L'axe 26 de la pointe est sensiblement parallèle à l'axe 17 du rouleau ou faiblement incliné par rapport à ce dernier. La bande de roulement est soulevée sans écraser la carcasse. De plus, on met la pointe en rotation autour de l'axe 26 afin que le contact entre la pointe et la bande de roulement réalise un frottement de roulement plutôt qu'un frottement de glissement et ne risque donc pas d'endommager la gomme. La pointe tourne donc dans le sens inverse du rouleau.

Le chauffage peut avoir lieu par exemple avec un jet d'air chaud projeté par une buse conique 18.

Ce mode de mise en oeuvre est notamment adapté aux bandes de roulement dépourvues de renforts longitudinaux.

Deux autres modes de réalisation sont illustrés aux figures 6 et 7.

Le mode de la figure 6 ne diffère du précédent que par le fait que cette fois la pointe 24 écrase la carcasse sans soulever la bande de roulement. Ainsi on presse la carcasse sans presser la bande de roulement. Le résultat est similaire, à savoir qu'on crée un espace entre l'un des bords de la bande de roulement et la carcasse, ce qui permet de chauffer le matériaux thermofusible au moyen de la buse 18. Cette fois la pointe tourne dans le même sens que le rouleau.

Le mode de réalisation de la figure 7 ne diffère de ceux des figures 5 et 6 que par le fait que la pointe 24 simultanément soulève la bande de roulement et écrase la carcasse pour créer l'espace permettant de chauffer le matériau thermofusible. Contrairement aux deux précédents modes, on ne met pas la pointe en rotation et celle-ci entre en force entre la bande et la carcasse.

Bien entendu, on pourra apporter à l'invention de nombreuses modifications sans sortir du cadre de celle-ci, qui est défini dans les revendications suivantes.

## Revendications

1. Procédé de rechapage d'une enveloppe (2) de pneumatique, dans lequel, une bande de roulement (10) en gomme cuite étant disposée sur une carcasse (4) avec une couche de matériau thermofusible interposée entre la bande et la carcasse, on effectue un roulettage de la bande de roulement au moyen d'au moins un rouleau (16) ayant une largeur (r) inférieure à une largeur (b) de la bande de roulement et on chauffe localement la couche durant le roulettage.

2. Procédé selon la revendication précédente dans lequel on effectue un chauffage local de la couche de matériau thermofusible juste avant le roulettage.

3. Procédé selon au moins l'une quelconque des revendications précédentes dans lequel la bande de roulement (10) comprend des renforts.

4. Procédé selon au moins l'une quelconque des revendications précédentes dans lequel on apporte la bande de roulement (10) sous la forme d'un anneau fermé et on la dispose sur la carcasse.

5. Procédé selon au moins l'une quelconque des revendications précédentes dans lequel on dispose du matériau thermofusible sur la bande de roulement (10) et la carcasse (4), puis on assemble la bande de roulement à la carcasse.

6. Procédé selon au moins l'une quelconque des revendications précédentes dans lequel la largeur (r) du rouleau est inférieure à une moitié de la largeur (b) de la bande de roulement, de préférence à un quart de la largeur de la bande de roulement

7. Procédé selon au moins l'une quelconque des revendications précédentes dans lequel le rouleau (16) effectue plusieurs tours de l'enveloppe sur la bande de roulement et on déplace le rouleau suivant une direction d'un axe (15) de l'enveloppe entre les tours.

8. Procédé selon au moins l'une quelconque des revendications précédentes dans lequel le rouleau exerce sur la couche thermofusible une pression comprise entre 1 et 4.10⁵Pa.

9. Procédé selon au moins l'une quelconque des revendications précédentes dans lequel le nombre de rouleaux (16) est supérieur ou égal à deux, les rouleaux effectuant le roulettage de la bande de roulement simultanément et de préférence on déplace simultanément les rouleaux (16) vers des bords respectifs opposés de la bande de roulement.

10. Procédé selon au moins l'une quelconque des revendications précédentes dans lequel on crée, par exemple au moyen d'un outil tronconique, un espace entre un bord de la bande de roulement et la carcasse, notamment en soulevant la bande de roulement et/ou en pressant la carcasse, et on chauffe le matériau thermofusible contigu à cet espace.

11. Installation (14) de rechapage d'une enveloppe de pneumatique, comprenant :
- au moins deux rouleaux coaxiaux (16) de roulettage d'une enveloppe, et
- des moyens (20) pour déplacer les rouleaux durant le roulettage suivant une direction parallèle à un axe (16) des rouleaux,
**caractérisée en ce qu'**elle comprend en outre des moyens (18) aptes à chauffer localement une couche de matériau thermofusible de l'enveloppe durant le roulettage.

## Patentansprüche

1. Verfahren zur Runderneuerung eines Luftreifenmantels (2), wobei eine Lauffläche (10) aus gekochtem Gummi auf einer Karkasse (4) mit einer Schicht aus wärmeschmelzbarem Werkstoff, die zwischen der Lauffläche und der Karkasse eingefügt ist, angeordnet ist und wobei ein Walzen der Lauffläche mittels mindestens einer Walze (16) ausgeführt wird, die eine Breite (r) hat, die kleiner ist als eine Breite (b) der Lauffläche, und die Schicht während des Walzens lokal erhitzt wird.

2. Verfahren nach dem vorstehenden Anspruch, wobei ein lokales Erhitzen der Schicht aus wärmeschmelzbarem Werkstoff unmittelbar vor dem Walzen ausgeführt wird.

3. Verfahren nach mindestens einem der vorstehenden Ansprüche, wobei die Lauffläche (10) Verstärkungen umfasst.

4. Verfahren nach mindestens einem der vorstehenden Ansprüche, wobei die Lauffläche (10) in der Form eines geschlossenen Rings antransportiert und auf der Karkasse angeordnet wird.

5. Verfahren nach mindestens einem der vorstehenden Ansprüche, wobei wärmeschmelzbarer Werkstoff auf der Lauffläche (10) und der Karkasse (4) angeordnet wird, und die Lauffläche dann mit der Karkasse zusammengefügt wird.

6. Verfahren nach mindestens einem der vorstehenden Ansprüche, wobei die Breite (r) der Walze kleiner ist als eine Hälfte der Breite (b) der Lauffläche, bevorzugt als ein Viertel der Breite der Lauffläche.

7. Verfahren nach mindestens einem der vorstehenden Ansprüche, wobei die Walze (16) mehrere Umdrehungen des Mantels auf der Lauffläche ausführt, und die Walze gemäß einer Richtung einer Achse (15) des Mantels zwischen den Umdrehungen bewegt wird.

8. Verfahren nach mindestens einem der vorstehenden Ansprüche, wobei die Walze auf die wärmeschmelzbare Schicht einen Druck zwischen 1 und 4.10⁵ Pa ausübt.

9. Verfahren nach mindestens einem der vorstehenden Ansprüche, wobei die Anzahl von Walzen (16) größer oder gleich zwei ist, wobei die Walzen das Walzen der Lauffläche gleichzeitig ausführen, und die Walzen (16) bevorzugt gleichzeitig zu den jeweiligen entgegengesetzten Rändern der Lauffläche bewegt werden.

10. Verfahren nach mindestens einem der vorstehenden Ansprüche, wobei zum Beispiel mittels eines kegelstumpfförmigen Werkzeugs ein Abstand zwischen einem Rand der Lauffläche und der Karkasse geschaffen wird, insbesondere durch Anheben der Lauffläche und/oder Drücken der Karkasse, und der wärmeschmelzbare Werkstoff, der an diesen Raum anschließt, erhitzt wird.

11. Anlage (14) zur Runderneuerung eines Luftreifenmantels, die Folgendes umfasst:
- mindestens zwei koaxiale Walzen (16) zum Walzen eines Mantels, und
- Mittel (20) zum Bewegen der Walzen während des Walzens entlang einer Richtung parallel zu einer Achse (16) der Walzen,
**dadurch gekennzeichnet, dass** sie außerdem Mittel (18) umfasst, die geeignet sind, um eine wärmeschmelzbare Werkstoffschicht des Mantels während des Walzens lokal zu erhitzen.

## Claims

1. Method for retreading a tyre casing (2), **characterized in that**, a cured rubber tread (10) being disposed on a carcass (4) with a layer of hot-melt material interposed between the tread and the carcass, the tread is rollered by means of at least one roller (16) having a width (r) less than a width (b) of the tread and the layer is locally heated during the rollering.

2. Method according to the preceding claim, wherein the layer of hot-melt material is heated locally just before the rollering operation.

3. Method according to at least either one of the preceding claims, wherein the tread (10) comprises reinforcers.

4. Method according to at least any one of the preceding claims, wherein the tread (10) is provided in the form of a closed ring and it is disposed on the carcass.

5. Method according to at least any one of the preceding claims, wherein hot-melt material is disposed on the tread (10) and the carcass (4) and then the tread is fitted on the carcass.

6. Method according to at least any one of the preceding claims, wherein the width (r) of the roller is less than half the width (b) of the tread, preferably than one quarter of the width of the tread.

7. Method according to at least any one of the preceding claims, wherein the roller (16) executes several circuits of the casing on the tread and the roller is moved in a direction of a casing axis (15) between the circuits.

8. Method according to at least any one of the preceding claims, wherein the roller exerts a pressure of between 1 and 4x10⁵ Pa on the hot-melt layer.

9. Method according to at least any one of the preceding claims, wherein the number of rollers (16) is greater than or equal to two, the rollers rollering the tread simultaneously, and preferably the rollers (16) are moved towards the respective opposite edges of the tread simultaneously.

10. Method according to at least any one of the preceding claims, wherein a space is created, for example by means of a frustoconical tool, between an edge of the tread and the carcass, notably by lifting the tread and/or by pressing the carcass, and the hot-melt material contiguous with this space is heated.

11. Installation (14) for retreading a tyre casing, **characterized in that** it comprises:
- at least two coaxial rollers (16) for rollering a casing,
- means (20) for moving the rollers in a direction parallel to an axis (16) of the rollers during the rollering operation, and
- means (18) that are able to heat the casing during the rollering operation.
